# EUROPEAN PATENT APPLICATION

(11) **EP 2 399 835 A1**
(43) Date of publication of application: **28.12.2011**
(21) Application number: 11170813.7
(22) Date of filing: 21.06.2011
(51) Int. Cl.: B65D 5/20, B65D 5/42, B65D 5/56, B31B 7/00

(54) **Method & apparatus for making food carton**

(30) Priority: 28.06.2010 GB 1010789
(71) Applicant: St Neots Packaging Limited, St Neots, Cambridgeshire PE 19 8ET (GB)
(72) Inventor: Orsman, Gary, St Neots, Cambridgeshire PE19 8ET (GB); Damiano, Giorgio, St Neots, Cambridgeshire PE19 8ET (GB)
(74) Representative: Lipscombe, Martin John

(57) **Abstract**

Disclosed is a method of forming a web of laminated board or card, suitable for making articles of packaging for a foodstuff, the method comprising the steps of:
(a) feeding a web (100) of board or card through one or more printing stations (106) to apply one or more colours of print to at least one side of the web;
(b) passing the web through a first die station (110) at which a window is cut in the web; and, at the same or a further die station, at least partially defining one or more flange portions by forming continuous hinge lines of partial cut through the thickness of the web and/or discontinuous hinge lines of complete cut through the thickness of the web;
(c) applying a film to one surface of the web to make a laminated web, the film extending across the window formed in step (b);
(d) passing the laminated web through a second die station (118), at which a "reverse" crease is introduced along the hinge lines of the one or more partially defined flange portions: and
(e) at a further, third die station (120), forming the remaining folds or creases.

## Description

### Field of the Invention

The present invention relates to a method for manufacturing a blank for an article of packaging for a foodstuff, apparatus for performing the method, an article of packaging assembled from the blank, and a method of packaging a foodstuff using the packaging article.

### Background of the Invention

Various articles for packaging foodstuffs are known. Articles of packaging comprising synthetic plastics materials are extremely light and strong, but are not biodegradable. As a result of the need for recyclable and biodegradable materials, packaging formed from card, board and similar substances is becoming increasingly popular. Unfortunately, card and board and other cellulose-based materials are generally not as strong as synthetic plastics materials and are far less impermeable. Accordingly card and board packaging must be thicker than synthetic plastics packaging and typically must be treated with thin films of moisture-resistant coatings to prevent the packaged foodstuff from becoming dehydrated and/or prevent the ingress of water into the package during storage and/or transit.

In addition there is a need to improve the impermeability of food packaging to moisture to extend shelf-life, especially for sandwiches. At present the relatively short short-life of many food items leads to excessive amounts of waste. Longer shelf-life can be obtained by using synthetic plastics packaging materials, but as explained above, these do not meet the need for recyclability and/or biodegradability.

Accordingly, it is now known to use cellulose-based board or card material for forming food packaging, and to coat at least one side of the board or card with newly-developed biodegradable laminate films, such as BOPP (biaxially oriented polypropylene) and PLA (poly lactic acid) e.g. "Earthfirst"^{™} film available from Sidaplax (see US 7,615,183).

A typical sandwich carton, formed from a blank of laminated material is disclosed in GB 2 397 573. The assembled carton is of generally triangular-prism shape. The cardboard carton is covered on at least part of inner surface with a thin layer of plastics film.

Processes for making such packaging involve the use of reels of board and reels of laminate film, which are mated in a step in the production method, using automated machinery. The process is described in, *inter alia,* WO 2008/025982.

The film covers an aperture in the card, creating a window through which the packaged sandwich inside the carton is visible for inspection by a prospective purchaser. A generally rectangular opening in the carton, through which the packaged sandwich may be removed, is closed by an integral lid, which is joined to the rest of the carton along a folded edge. The other three edges of the opening are bordered by out-turned "flange" portions or tabs, to which (in the closed carton) the lid is heat-sealed by partial melting of the plastics laminate material.

According to WO 2008/025982, a process of preparing a web of laminated card material suitable for food packaging comprises the following steps:
(a) a reel of flexible card material in a reel is mounted on a roller and unrolled through several different printing stations, each of which applies print of a particular colour to selected parts of the card;
(b) the web of card is then fed through a pair of cutter rollers which introduce continuous lines of partial sever ("kiss cuts") or discontinuous lines of full sever ("cuts"), and which also form a window in the web, by cutting out a generally rectangular section from the web, the cut portions being removed and discarded as waste;
(c) the cut card is then coated with a plastics film, such as cellulose or polyethylene, to form a laminated web; and
(d) the laminated web is then fed through a further cutting station (on a separate machine), at which individual blanks are cut out from the laminated web material.

WO 2008/099195 concerns a method and apparatus for manufacturing blanks for packaging. The document discloses a method in which a reel of paperboard is fed through a flexographic press. The paperboard substrate passes through a plurality of printing stations, and is then treated on its inner face with adhesive and coated with a laminating film, fed into the press from a reel of suitable film material. The laminated film is then fed to a single die-cutting station, which introduces cuts into the laminated web. A second embodiment (in Figure 3 of WO 2008/099195) discloses a single die-cutting station upstream of the laminating station. Neither embodiment discloses a method or apparatus comprising a plurality of die-cutting stations.

It is an object of the present invention, in preferred embodiments, to provide an improved method for making blanks for articles of packaging of foodstuffs, and an automated apparatus for performing the method. It is also an object of the invention to provide a blank, and an assembled article of packaging, which is improved relative to known designs.

The present inventors have observed that a problem exists in connection with sandwich cartons produced by conventional, existing techniques. More specifically, the inventors have observed that the laminate or film applied to the inside of the carton creates significant resistance to the outward folding of the "flange" portions around the opening of the sandwich carton. This has a number of undesirable effects. Firstly, when the lid is heat-sealed to the flange portions, (once a sandwich has been inserted into the package), the flange portions may be variably positioned (due to the film-mediated resistance to the outward folding) and, as a result, there is an undesirable lack of reproducibility in the relative positioning of the lid and the flange portions. This can lead to a high rejection rate for the finished product.

Secondly, once the lid has been heat-sealed to the flange portions, because the flange portions resist being turned outwards, they tend to turn back inwards. As a result, the lid may not lie very flat around the edges of the pack. This is not desirable from an aesthetic point of view and may even cause difficulty with packing or stacking of the sealed cartons.

### Summary of the Invention

In a first aspect the invention provides a method of forming a web of laminated board or card, suitable for making articles of packaging for a foodstuff, the method comprising the steps of:
(a) feeding a web of board or card through one or more printing stations to apply one or more colours of print to at least one side of the web;
(b) passing the web through a die station at which a window is cut in the web; and, at the same or a further die station, at least partially defining one or more flange portions by forming continuous hinge lines of partial cut through the thickness of the web and/or discontinuous hinge lines of complete cut through the thickness of the web;
(c) applying a film to one surface of the web to make a laminated web, the film extending across the window formed in step (b);
(d) passing the laminated web through a second die station, at which a "reverse" crease is introduced along the hinge lines of the one or more partially defined flange portions: and
(e) at a further, third die station, forming the remaining folds or creases.

Conveniently, the method will further comprise the step of (f) cutting the laminated web, so as to form therefrom a plurality of blanks which can be assembled into articles of packaging. The method may further comprise the optional step of applying an adhesive to at least a first part of the blank, and folding the blank so as to cause at least a second part of the blank to adhere to the first part of the blank, so as to form a folded, partially assembled blank. The adhesive will typically comprise a hot melt glue, such as are available commercially (e.g. Henkel Corporation). Preferably the folded, partially assembled blank is folded in such a way as to be generally flat, which facilitates transport, storage and manipulation.

Preferably steps (e) and (f) are performed at the same die station. Preferably, all of step (b) is performed at a single die station. By way of explanation, and for the avoidance of doubt, the reverse crease does not cut through the laminating film.

The film applied to the web in step (c) will preferably be applied over the entire surface of one side of the web, which is the easiest thing to do in terms of practical manufacturing.

In a preferred embodiment, the flange portions of the article abut an opening in the finished blank, and are arranged so as to be out-turned in the finished packaging article when in use, and conveniently are heat-sealed to another part of the packaging to enclose the foodstuff within the packaging. Conveniently the flange portions are heat-sealed to a lid, which lid is advantageously integral with, and forms part of, the packaging article.

More especially, the lid is advantageously continuous with the rest of the packaging article along one edge of the lid, which includes a fold or score line. Folding the lid about the fold or score line brings the lid to lie over the opening in the article of packaging, and heat sealing of the lid to the flange portions around the periphery of the opening closes the lid, secures it in place, and forms a substantially hermetic seal around the packaged foodstuff.

The present invention is concerned preferably with packaging for solid foodstuffs, not packaging for liquids or powders. In some embodiments, the invention concerns packaging for salads, in the form of a shallow, lidded box; in other, preferred, embodiments the invention concerns packaging for sandwiches, especially packaging which, in use, is essentially triangular prism-shaped. In particular, the method/apparatus of the present invention is preferably not concerned with gable-top packaging, which is very different to the packaging of interest in the present application.

The bulk of the steps of the method of the invention can be conveniently performed on a single automated machine. In a second aspect the invention thus provides an automated machine for performing the method of the invention defined above.

In particular, in a second aspect, the invention provides an automated apparatus for forming a web of laminated board or card suitable for making articles of packaging for a foodstuff, the apparatus comprising:
(i) a feed means for accepting a feed of board or card web into the apparatus;
(ii) a feed means for accepting a feed of a laminating film into the apparatus;
(iii) one or more print stations at which at least one side of the board or card web is printed;
(iv) a first die station for cutting out a window in the web and means, at the said die station or at a further die station, for at least partially defining one or more flange portions by forming continuous hinge lines of partial cut through the thickness of the web and/or discontinuous hinge lines of complete cut through the thickness of the web;
(v) a laminating station, at which the film is coated on one surface of the web, to make a laminated web;
(vi) a second die station, downstream of the laminating station, at which a "reverse" crease is introduced along at least one of the hinge lines of the one or more partially defined flange portions;
(vii) a third die station to form the remaining desired folds or creases in the web; and, optionally
(viii) a final cutting or stamping station, at which flat blanks are cut out from the laminated web.

It is implicit in the foregoing that the third die station is downstream of the second die station. Conveniently the third die station may also perform the final cutting or stamping, such that, in preferred embodiments, the third die station is substantially the final station in the apparatus. It also follows that components (vii) and (viii) may be combined such that the respective functions are performed substantially simultaneously, in preferred embodiments.

In preferred embodiments of the invention, the first die station (iv), the laminating station (v), the second die station (vi) and the third die station (vii) are sequential and occur in the stated relative order in the apparatus, going in the direction from an upstream end to a downstream end.

The second die station, which introduces the reverse crease, does not cut the laminating film along the line of the reverse crease: the film is left intact along the reverse crease.

Typically a die station will comprise a pair of rollers, between which the web (or laminated web, as the case may be) is fed. Desirably one of the pair of rollers (the "die" roller) will have protruding portions which act to nip the web against the other roller (the "anvil" roller), which will desirably have a generally smooth surface. The die roller will preferably additionally comprise resilient portions, e.g. resilient foam or rubber inserts, which are positioned so as to urge the blank away from the die roller. The waste of the web material is conveniently not acted on by such resilient portions and therefore tends to adhere slightly to the die roller. In this way, at the final die station, the finished blank can be readily separated from the rest of the web. In a preferred embodiment, at the final die station, the anvil roller is beneath the web and the die roller is above the web, such that the waste material tends to be separated in an upward direction and the finished blanks tend to separate in a relatively downward direction from the waste.

The apparatus will preferably further comprise one or more, in any combination, of the following: at least one heating means, such as an infra-red heater, or ultra-violet curing means, to dry the web after passage through one or more of the print stations; a plurality of guide rollers to guide the passage of the web and/or the film; and cleaning means (e.g. a suction means) to clean the web of card or board, preferably at an early stage in the processing (e.g. prior to printing).

The feed means for the feed of board or card will conveniently comprise a spindle or roller for accepting a reel of board and card, and a suitable drive means. A similar arrangement may be provided for feeding the laminating film into the apparatus. Thus, the feed of card or board, and the feed of laminating film, in the method/apparatus of the invention may conveniently be made substantially continuous.

The card or board is typically provided on a large reel, as is the laminating film, (although the reel of laminating film is considerable smaller than the reel of board or card, as the film is much thinner). Desirably the apparatus is capable of accepting, simultaneously, two reels of board or card; one of the reels being in use and actively fed into the machine, the other being idle, such that, when the "in use" reel is exhausted or is approaching exhaustion, the machine can then start to be fed from the previously idle reel, whilst the exhausted reel is replaced. In this way, "down time" for the apparatus can be minimised. A similar dual reel system is conveniently also adopted for the laminating film supply. The joining of the new reel of board or card to the end of the previous reel is termed "splicing", as is the joining of the new reel of film to the end of the old reel of film.

An essential feature of the method of the invention is the reverse crease of the hinge lines of the partially defined flange portions, after the web has been laminated.

The term "reverse crease" is a term of the art, and well known and understood to those skilled in the art. In essence, when forming a flat blank which can be folded to assemble an article of packaging for a foodstuff, most of the folds are "inward" and require creases to be made on the inner surface of the substrate or web. These inward folds allow the sides and ends of the blank to be folded upwards and inwards to form the article of packaging. A "reverse crease" is a thus crease formed on the outer surface of the substrate or web, to facilitate an outward fold. It is hence a fold in the reverse direction to the majority of the folds present in the assembled article of packaging. A reverse crease is, generally, desired to be avoided in the art of forming articles of packaging, as it requires a further processing step, which can reduce rates of production.

Thus, the second die station, which introduces the reverse crease, is an essential feature of the apparatus. Apparatus generally suitable for use in the invention is available from Gallus (Gallus Ferd. Rüesch AG, 9016 St. Gallen, Switzerland), but which lacks, *inter alia,* the reverse creasing station. The person skilled in the art can, with the benefit of the present disclosure, readily modify the commercially available apparatus to include the necessary reverse creasing station.

In a third aspect, the invention provides a flat blank for forming an article of packaging for a foodstuff, especially a sandwich, the flat blank comprising:
a substrate of board or card, being laminated on an inner surface thereof with a layer of heat-sealable plastics film; the blank having a base wall and a back wall joined along a fold line, components to form two side walls in the assembled carton, and an integral lid attached to a wall of the blank; the blank having one or more flange portions which abut an opening in the assembled carton, the opening being closable by heat sealing the integral lid to the one or more flange portions; wherein the one or more flange portions of the blank are defined at least in part by a continuous hinge line of partial cut through the thickness of the substrate and/or by a discontinuous hinge line of complete cut through the thickness of the substrate, and wherein the one or more flange portions are further defined by a reverse crease or fold in the substrate which substantially follows the said hinge line.

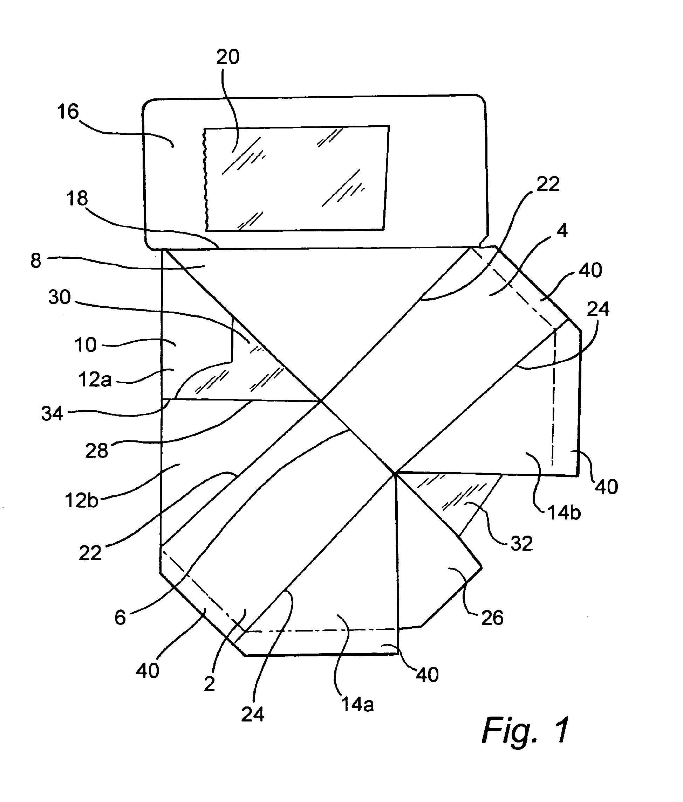

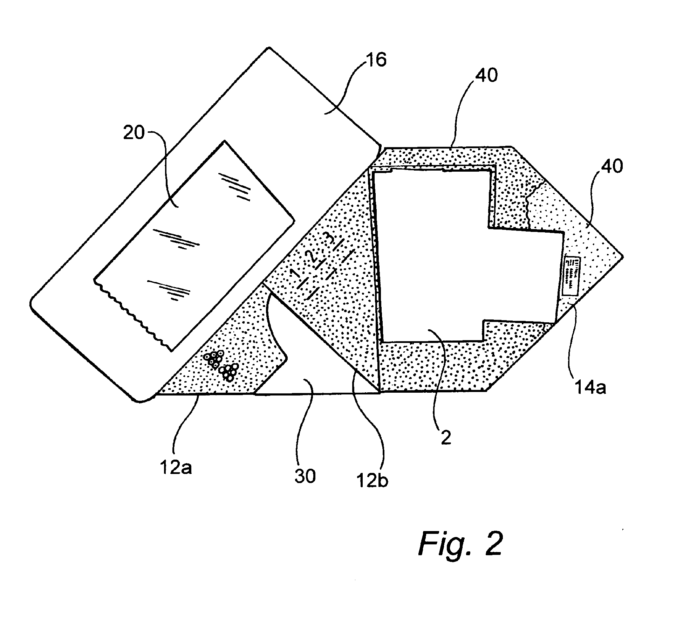

Preferably the one or more flange portions are defined in the blank by discontinuous hinge lines of complete cut. In one embodiment, the hinge line is formed by 7 mm lengths of complete cut through the thickness of the board, with adjacent cuts separated by 1 mm 'notches' of uncut board. A preferred embodiment of a blank in accordance with the invention is illustrated in Figures 1 and 2 and discussed further in the ensuing Examples.

The board or card is advantageously formed of recycled card or paper, optionally coated or treated, and typically has a "weight" in the range 80-250gsm, preferably 125-200 gsm. The film is preferably a transparent plastics film with a heat sealable coating. Suitable film is available from Sidaplax (source) and includes biaxially oriented polypropylene (BOPP).

Heat-sealable coatings, are well known to those skilled in the art. Heat-sealing is effected by bringing two portions of the packaging into juxtaposition, at least one of which (preferably both) has/have a heat-sealable coating. Heat is then applied to one or both of the juxtaposed portions, so as to bring about a sufficient temperature, for a sufficient duration, to cause at least partial melting of the heat-sealable coating. Typical conditions are exposure to a temperature of about 180°C with 1-2 seconds dwell time.

In preferred embodiments the blank will comprise an aperture in the substrate, which is overlaid by the transparent film, so as to form a window in the assembled packaging, through which window a prospective consumer can view the packaged foodstuff prior to purchase. The aperture is conveniently provided in the integral lid part of the blank. The window can be any shape e.g. circular or triangular, but will typically be generally rectangular (optionally with rounded corners). The window will, in some embodiments, preferably have a visible area of about 50-75cm² on one surface which, for a sandwich carton, affords a reasonable view of the packaged sandwiches within the carton.

In preferred embodiments, the aperture provided in the integral hinged lid does not extend right to an edge of the lid. Thus, there is preferably a border of substrate in the lid "framing" the aperture. Preferably the frame is asymmetric, being wider on the outer side than on the inner side (adjacent the "hinge"). The width of the frame along the inner side of the frame around the aperture is preferably at least 7mm wide, more preferably at least 8mm wide, and most preferably 9-11mm wide. The frame on this inner (hinge) side of the lid serves both to provide increased rigidity to the assembled article of packaging (reducing the likelihood of the side bowing in) and also to obscure the edges of the folded sides of carton when assembled, which would otherwise be visible through the window if the aperture in the lid extended right to the hinged edge of the lid.

The blank will preferably also comprise other "film-only" portions, from which the substrate has been removed. In one embodiment, one or both side walls of the assembled packaging will comprise folded, overlapping portions. Desirably at least a part of the folded or overlapping portion will be formed of a "film-only" portion. The "film-only" portion, lacking the substrate, is thinner and more flexible than those parts of the blank where substrate is present, and can therefore be folded far more readily.

In preferred embodiments, the blank is for forming a triangular prism-shaped carton for packaging triangular cut sandwiches.

In a particular embodiment, the blank comprises two adjacent portions, at least one of which has a "film-only" part. The two adjacent portions are joined along a fold line. Preferably the "film-only" part extends along the junction of the two adjacent fold lines (i.e. such that the fold occurs substantially in, or adjacent to, the "film-only" part, which is most flexible). Advantageously, the "film-only" part extends along the majority (i.e. over 50%) of the length of the fold between the adjacent portions, preferably over 60%, more preferably over at least 70%, and most preferably over at least 80% of the length of the fold. It is however preferred to retain at least some substrate present along the fold, in order to give some structural strength and some "permanence" to the fold, since the film alone is too flexible and will unfold or uncrease too readily. Advantageously, the retained substrate is provided at an end region of the fold, desirably at the end region which is at the outer edge of the blank. The ease with which the substrate portion can be folded can be increased by providing a cut (partially or completely through the thickness of the substrate) along a fraction of the length of the fold.

The blank of the third aspect of the invention is conveniently made by the method of the first aspect as defined and detailed above. The blank is conveniently manufactured using the automated apparatus of the second aspect.

In a preferred embodiment, the blank of the invention is for a sandwich carton, with a "handedness" which facilitates manipulation of the blank (either in its completely flat form, or in a glued, and partially folded flat form). In particular, the blank preferably possesses a handedness which, when the blank is in a flat but glued and partially folded form, allows it to be fed into the hopper of an automated machine for packaging foodstuffs into the packaging and/or for closing and sealing the lid of the packaging. Thus a preferred embodiment has an integral flap positioned between a base and a sidewall, on the same side of the base as an integral lid, as illustrated in Figure 1 below. A blank with opposite handedness (i.e. with the integral flap provided adjacent the other side wall) is within the scope of the invention, but is not preferred.

In a fourth aspect, the invention provides a method of packaging a foodstuff, the method comprising the steps of: assembling an article of packaging, by folding a laminated blank essentially as defined in the second aspect of the invention; inserting a foodstuff into the assembled article of packaging; and heat sealing the lid to the one or more flange portions to seal the foodstuff within the packaging. Optionally the method may also comprise the step of flushing and/or filling the package, with the foodstuff inside, with an inert gas (such as nitrogen) prior to heat-sealing the packaging.

For the avoidance of doubt, it is hereby expressly stated that the features described herein as "preferred", "desirable", "convenient", "advantageous" or the like may be present in the invention in isolation, or in any combination with any other features so described, unless the context dictates otherwise. Additionally, all preferred features of each of the aspects of the invention apply to all the other aspects of the invention *mutatis mutandis,* unless the context dictates otherwise.

The various aspects of the invention will now be described by way of illustrative embodiment and with reference to the accompanying drawings, in which:
Figure 1 shows a flat blank for an article of packaging for a sandwich;
Figure 2 shows the blank depicted in Figure 1 after gluing and partial folding, to form a partly-folded sandwich carton;
Figure 3A is a schematic representation of one embodiment of automated apparatus in accordance with the second aspect of the invention, for performing the method of the first aspect of the invention;
Figure 3B is a detailed schematic view of part of the apparatus illustrated in Figure 3A; and
Figures 4-6 are plan views of various cuts and/or folds made in a web of material in one embodiment of a method in accordance with the first aspect of the invention.

### Detailed Description of Embodiments

Referring to Figure 1, the invention provides in one aspect a flat blank for an article of packaging for a foodstuff. In the embodiment depicted in Figure 1, the blank is for a sandwich carton, for packaging two triangular-cut sandwiches. When folded together the blank forms a triangular prism-shaped carton.

The blank is formed primarily from a substrate of board or card. A typical quality of board is in the range 80-250 grams per square metre (gsm). Any suitable board may be used. The substrate is laminated on one surface with a thin film of a transparent synthetic plastics material. In the embodiment depicted the film comprises biaxially oriented polypropylene and has a heat-sealable coating.

The blank has several fold lines and several cut lines, which define various features of the blank. In particular, the blank has a base 2 and a back 4, joined along fold line 6; a side wall 8 with an integral flap 10, formed from two integral flap portions 12a and 12b; and a second side wall formed from side wall components 14a, 14b, which, in the assembled carton, overlap each other to form a substantially continuous triangular-shaped wall. The blank also comprises an integral lid 16, attached to side wall 8 along fold line 18. The lid 16 has a generally rectangular aperture formed therein, which is covered by the transparent laminate film to provide a window 20. The window 20 allows a prospective consumer to view the sandwiches within the carton when assembled.

The aperture provided in the integral hinged lid does not extend right to an edge of the lid 16. There is a border of substrate in the lid "framing" the aperture. The frame is asymmetric, being wider on the outer side than on the inner side (adjacent the "hinge") with side wall 8. The width of the frame along the inner side of the frame around the aperture is 9-11mm wide. The frame on this inner (hinge) side of the lid serves both to provide increased rigidity to the assembled article of packaging (reducing the likelihood of the side bowing in) and also to obscure the edges of the folded integral flap portions 12a, 12b of the carton when assembled, which would otherwise be visible through the window if the aperture in the lid extended right to the hinged edge of the lid.

To assemble the blank, the side wall 8 and side wall components 14a, b, (together with the associated flaps, lid etc.) are folded upwards through about 90° about the respective fold lines 22 and 24. The blank is then folded through about 90° along fold line 16.

In so doing, side wall component 14b comes to overlap the tab 26 at the end of side wall component 14a; and integral flap portions 12a and 12b are brought together, folding inwardly about fold line 28.

It will be noted that the board is cut away at parts of the blank which form part of the sides of the carton when it is assembled. Thus, there are portions 30 and 32 where there is laminate film, but no board. These portions, lacking board substrate, are very thin and flexible. As a result they greatly facilitate the folding of the blank into the assembled carton. There is another advantage accruing from the use of a "film-only" portion at 30. When the integral flap is formed by folding along fold line 28, there are two thicknesses of board (provided by flap portions 12a and 12b respectively). The inventors have found that, if the integral flap is formed entirely from laminated board it is resistant to folding, and tends to bulge outwards, projecting into that part of the interior of the carton which is visible through window 20, which looks untidy and is undesirable.

Another feature which facilitates folding of the flap portions 12a/12b, and which lessens the tendency of the folded flap to bulge outwards, is that the strip of board 34 joining flap portions 12a and 12b is very narrow, about 7 or 8 mm long. Moreoever there is a 'notch' or partial cut in this strip of board, so that only about 1 or 2 mm is completely intact.

At the outer edges of base 2 and back 4 are "flange" portions 40. Similar flange portions 40 are formed at the outer edge of side wall components 14a and 14b. The flange portions are defined by discontinuous lines of cut through the board. The discontinuous cut lines comprise cuts 7 mm long, with intervening 1 mm portions of uncut board. It is these flange portions which are "reverse" creased during manufacture of the blank and which are heat sealed to the lid when the carton is fully assembled.

Figure 2 shows the blank of Figure 1 in a glued and partially folded form. In the partially folded carton, flap portion 12b is glued to flap portion 12a, and overlapping tab 26 of side wall component 14a is glued to side wall component 14b; and the blank is folded about central fold line 6.

The blank has a "handedness" which facilitates manipulation of the blank (either in its completely flat form, or in a glued, and partially folded flat formas). In particular the blank preferably possesses a handedness which, when the blank is in a flat but glued and partially folded form, allows it to be fed into the hopper of an automated machine for packaging foodstuffs into the packaging and/or for closing and sealing the lid of the packaging. Thus a preferred embodiment has an integral flap positioned between a base and a sidewall, on the same side of the base as an integral lid.

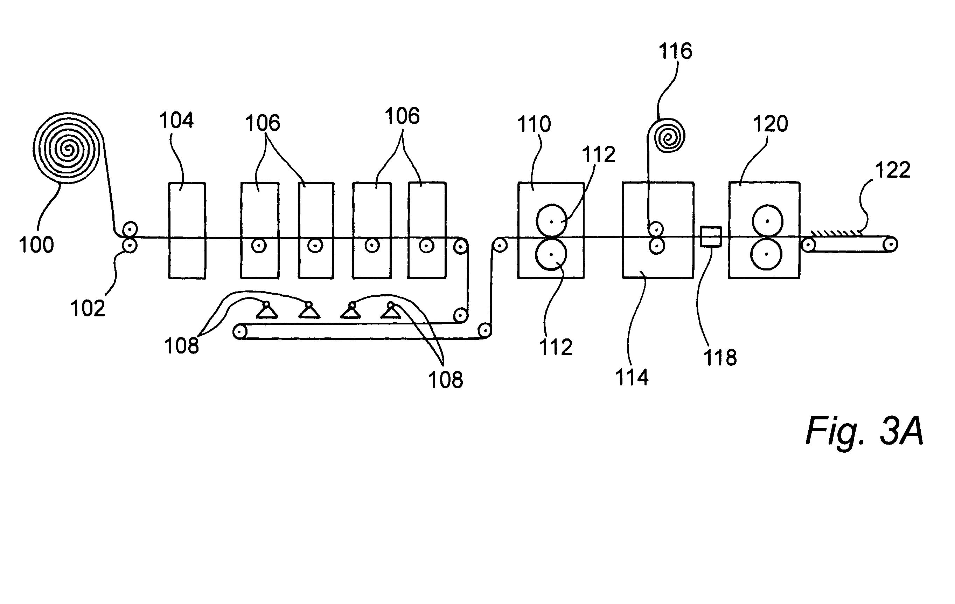

Figure 3A is a schematic representation of the automated apparatus of the invention performing the method of the invention. A large reel of board 100 is fed into the machine through guider rollers 102, and passes through an initial cleaning station 104, at which, *inter alia,* suction is applied to the web to remove dust and lint. The web then passes through a plurality of (typically seven) printing stations 106, at one or more of which a particular print colour is applied to one side of the board to build up the desired graphics images and/or text. The web then passes a series of infra red heaters 108 to assist in drying the printed surface.

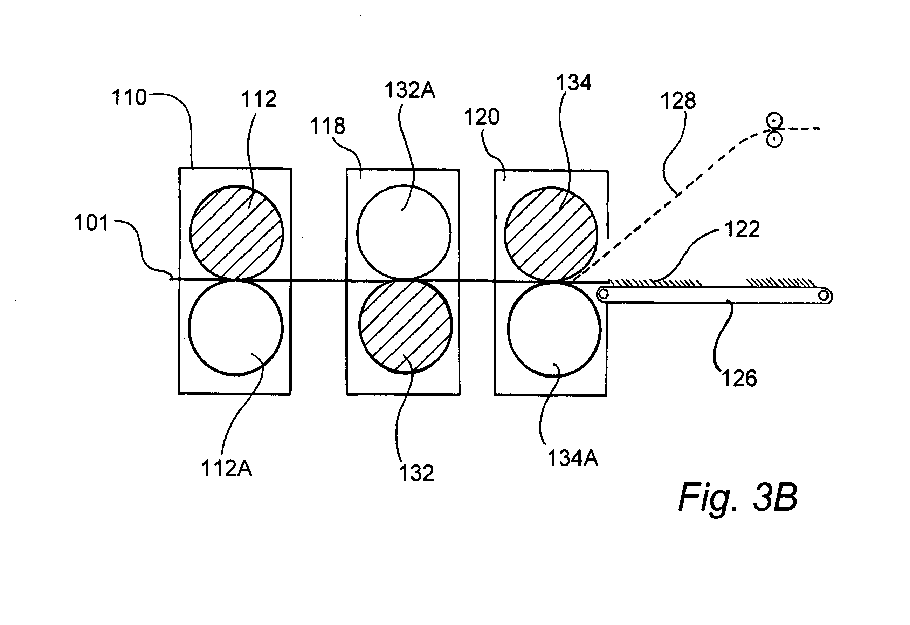

Next the web passes to a first die station 110. At die station 110 the web passes between a pair of rollers 112. These have cutting surfaces which are shaped so as to form the discontinuous hinge lines of cut which partially define the flange portions 40 in the blank, cut out the board from the portion of the blank which forms window 20 in the lid, to cut out the board from the "film-only" portions 30 and 32 of the blank, and also to introduce the kiss cut in the narrow strip of card at 34. The die stations are described more fully below with reference to Figure 3B.

The waste portions cut out from the web are extracted into a waste pipe.

At the next stage, laminating station 114, an adhesive is applied to the inner surface of the blank and a layer of film, supplied from reel 116, is applied to the glued inner surface to form a continuous coating on the inside of the blank. This is cured by exposure to ultra-violet radiation of the order of a few seconds.

The laminated web is then fed to a second die station 118. At this station, the parts of the blank which correspond to flange portions 40 are creased outwards (i.e. reverse creased), along the hinge lines. Importantly this pre-stretches the laminate film covering the web, so that when the flange portions are ultimately folded outwards to seal against the lid of the carton, the resistance to such outward folding is greatly reduced, which improves the consistency and reproducibility of the position of the flanges relative to the lid, and decreases the tendency of the flange portions to push the edge of the lid upwards. Although the invention is described with particular reference to a sandwich carton, and is especially suitable therefor, the person skilled in the art will appreciate that the same principles can be applied to any blank for an article of packaging foodstuffs, where the blank is laminated on at least one side and the assembled carton has outward-turned flange portions for heat-sealing to another portion of the container (such as a lid portion).

After the reverse creases have been introduced into the laminated web, the laminated web then advances to a third die station 120. This station introduces all the inward creases or folds of the inner (laminated) surface of the blank, and cuts out the finished flat blank 122 from the laminated web. The flat blanks are then usually fed into a further (conventional) machine for gluing and folding, to make a partially folded blank, which can be supplied to commercial food packagers for finally assembly of the carton, insertion of the foodstuff, and heat-sealing of the carton.

Figure 3B shows in greater detail part of the apparatus shown in Figure 3A, which part comprises the first die station 110, the second die station 118, and the third die station 120. The laminating station 114 shown in Figure 3A is omitted for simplicity, but would be positioned between first die station 110 and the second die station 118.

The pair of rollers 112 at first die station 110 comprise a die roller 112 and an anvil roller 112A. The die roller 112 has protruding cutting or creasing elements on its surface which, when the web 101 is fed through, introduce cuts or creases in the web, by pinching the web against the anvil roller 112A, which is a smooth roller with a level surface. The die roller 112 also comprises some resilient foam or rubber inserts, which push against the web, thus urging the web away from the die roller 112 once the web has passed the pinch point between die roller 112 and anvil roller 112A. This is important, since the web would otherwise tend to adhere to the die roller, because of the compaction caused by the cutting/creasing elements.

At the second die station 118 the web passes through a similar pair of rollers 132/132A. Significantly however, the positions of the die roller and smooth anvil roller are reversed relative to the first die station. Thus, at the second die station, the anvil roller 132A is above the web and the die roller 132 is below the web. Accordingly, the die roller 132 introduces a reverse crease into the outer surface of the web. This is the crease which facilitates outward folding of the flange portions of the blank.

From second die station 118, the web passes to a third and final die station 120. This has a die roller 134 and smooth anvil roller 134A. The positions of the die roller 134 and the anvil roller 134A are reversed relative to second die station 118. Thus, at third die station 120, the apparatus introduces the remaining creases (on the inner surface of the web) and cuts out the finished blanks 122 from the web, which are removed on conveyor belt 126.

The die roller 134 has, like die rollers 112 and 132, resilient foam or rubber inserts which are positioned so as to urge the finished blanks downwards away from contact with the die roller 134. The resilient foam or rubber inserts are positioned on the die roller 134 such that they do not act on the waste portions of web. These therefore tend to adhere slightly to the roller 134 and this facilitates separation of the blanks 122 from the rest of the web. The waste portion of the web 128 is separated in an upwards direction and extracted into a waste feed hopper or line.

It is greatly preferred that the die roller of the final station of the apparatus is above the web, as this facilitates relative upward extraction of the waste web 128 and (relative to the waste web) downward separation of the finished blanks 122. It is thus preferred, in turn, that the die roller at the station 118, which introduces the reverse crease, is below the web.

Thus, in the preferred embodiment illustrated in Figure 3B, the apparatus comprises three die stations: a first die station which cuts out an aperture in the web and partially defines the flange portions; a second die station, at which the reverse crease of the hinge lines is introduced; and a third die station at which the remaining creases are introduced and the blanks cut out from the rest of the web, and in which there is an alternating distribution of die and anvil rollers from one station to the next.

The described arrangement allows the apparatus to work at exceptionally high speed. The inventors have obtained speeds in excess of 120 metres web/minute, for extended periods (12 hours at a time).

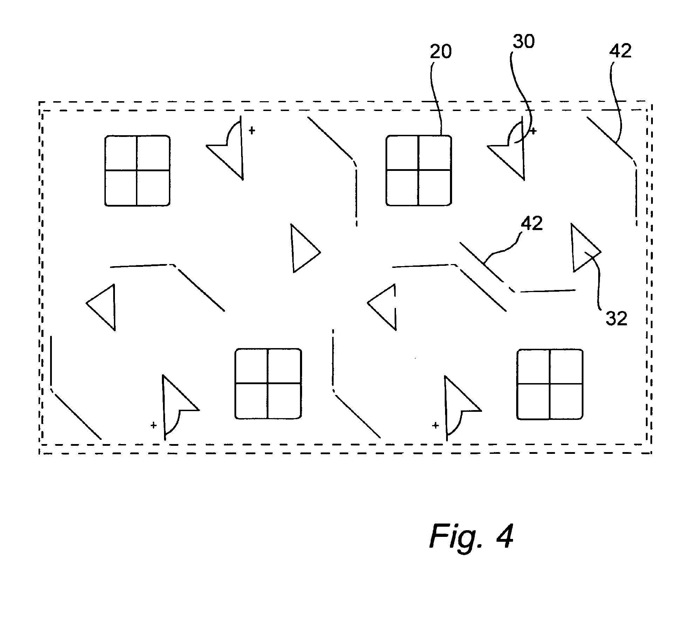

Figures 4-6 are plan views of the cuts and folds introduced into the web, before or after lamination (as appropriate) during the manufacturing process described above.

Figure 4 shows the shape of the cuts introduced in the web at the die station 110. As described, this comprises the cuts to remove the board from the portion which constitutes the window 20, and the "film-only" portions 30 and 32, in the finished blank, the discontinuous cut lines 42 which partially define the flange portions 40 in the finished blank. The Figure illustrates a portion of web which accommodates four blanks undergoing manufacture.

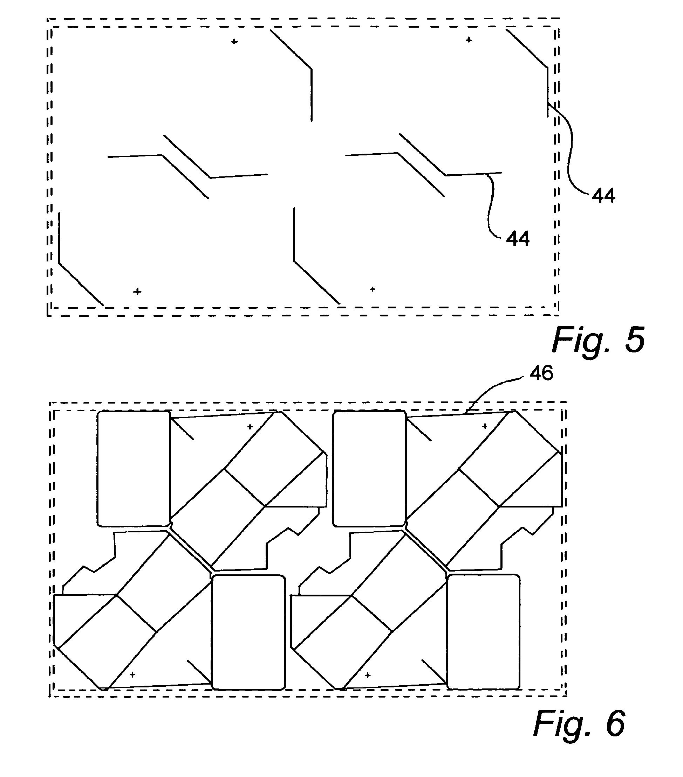

Figure 5 is a similar view, but shows the reverse creases 44 which are introduced by reverse creasing station 118, which mirror the lines of discontinuous cut 42 which partially define the flange portions 40. Again, a portion of web is illustrated which accommodates four blanks undergoing manufacture.

Figure 6 shows the creases introduced on the inner (laminated) surface of the laminated web at creasing/cutting station 120. The Figure also shows the cuts 46 around the periphery of each of the four blanks to release the blanks from the laminated web, and also cuts introduced into the blank to separate adjacent flange portions 40, which assists in the outward folding thereof.

Further embodiments of the invention will be apparent to those skilled in the art, and within the scope of the claims defining the invention, appended below.

## Claims

1. A method of forming a web of laminated board or card, suitable for making articles of packaging for a foodstuff, the method comprising the steps of:
(a) feeding a web (100) of board or card through one or more printing stations (106) to apply one or more colours of print to at least one side of the web;
(b) passing the web through a first die station (110) at which a window is cut in the web; and, at the same or a further die station, at least partially defining one or more flange portions by forming continuous hinge lines of partial cut through the thickness of the web and/or discontinuous hinge lines of complete cut through the thickness of the web;
(c) applying a film to one surface of the web to make a laminated web, the film extending across the window formed in step (b);
(d) passing the laminated web through a second die station (118), at which a "reverse" crease is introduced along the hinge lines of the one or more partially defined flange portions: and
(e) at a further, third die station (120), forming the remaining folds or creases.

2. The method of claim 1, further comprising the step of (f) cutting the creased laminated web to form a plurality of blanks from the laminated web.

3. The method of claim 2, wherein the step (f) is performed by the third die station.

4. The method of claim 2 or 3, further comprising the step of applying an adhesive to at least a first part of a blank, and folding the blank so as to cause at least a second part of the blank to adhere to the first part of the blank, so as to form a folded, partially assembled blank.

5. Automated apparatus for forming a web of laminated board or card suitable for making articles of packaging for a foodstuff, the apparatus comprising:
(i) a feed means (102) for accepting a feed of board or card web (100) into the apparatus;
(ii) a feed means for accepting a feed of a laminating film (116) into the apparatus;
(iii) one or more print stations (106) at which at least one side of the board or card web is printed;
(iv) a first die station (110) for cutting out a window in the web and means, at the said die station or at a further die station, for at least partially defining one or more flange portions by forming continuous hinge lines of partial cut through the thickness of the web and/or discontinuous hinge lines of complete cut through the thickness of the web;
(v) a laminating station (114), at which the film is coated on one surface of the web, to make a laminated web;
(vi) a second die station (118), downstream of the laminating station, at which a "reverse" crease is introduced along at least one of the hinge lines of the one or more partially defined flange portions;
(vii) a third die station (120) to form the remaining desired folds or creases in the web; and, optionally
(viii) a final cutting or stamping station, at which flat blanks are cut out from the laminated web.

6. Apparatus according to claim 5, further comprising one or more of the following: at least one heating means (108) to dry the web after passage through one or more of the print stations; a plurality of guide rollers to guide the passage of the web and/or the film; and cleaning means (104) to clean the web of card or board at stage prior to printing.

7. Apparatus according to claim 5 or 6, wherein the third die station also cuts out the flat blanks from the laminated web.

8. A flat blank for forming an article of packaging for a foodstuff, especially a sandwich, the flat blank comprising:
a substrate of board or card, being laminated on an inner surface thereof with a layer of heat-sealable transparent plastics film; the blank having a base wall (2) and a back wall (4) joined along a fold line (6), components to form two side walls (8,14a,b) in the assembled carton, and an integral lid (16) attached to a wall of the blank; the blank having one or more flange portions (40) which abut an opening in the assembled carton, the opening being closable by heat sealing the integral lid to the one or more flange portions; wherein the one or more flange portions of the blank are defined at least in part by a continuous hinge line of partial cut through the thickness of the substrate and/or by a discontinuous hinge line of complete cut through the thickness of the substrate, and wherein the one or more flange portions are further defined by an outward, reverse, crease or fold in the substrate which substantially follows the said hinge line.

9. A blank according to claim 8, wherein the one or more flange portions are defined by discontinuous hinge lines of complete cut.

10. A blank according to claim 8 or 9, wherein the blank comprises an aperture, overlaid by the transparent plastics film.

11. A blank according to claim 10, comprising one or more further "film-only" portions (30,32) devoid of substrate.

12. A blank according to any one of claims 8-11, for forming a triangular prism-shaped sandwich carton.

13. A method of packaging a foodstuff, the method comprising the steps of: assembling an article of packaging, by folding a laminated blank in accordance with any one of claims 8-12; inserting a foodstuff into the assembled article of packaging; and heat sealing the lid to the one or more flange portions to seal the foodstuff within the packaging.

14. A method of forming a web of laminated board or card, substantially as hereinbefore described and with reference to the accompanying drawings.

15. Automated apparatus for forming a laminated web of board or card, substantially as hereinbefore described and with reference to the accompanying drawings.
